# EUROPEAN PATENT SPECIFICATION

(11) **EP 2 871 091 B1**
(45) Date of publication and mention of the grant of the patent: **11.01.2017**
(21) Application number: 14179428.9
(22) Date of filing: 01.08.2014
(51) Int. Cl.: B60L 11/18

(54) **Apparatus for controlling LDC in electric vehicle**
Vorrichtung zur Steuerung von LDC in Elektrofahrzeugen
Appareil de commande ldc de véhicule électrique

(30) Priority: 06.11.2013 KR 20130134379
(43) Date of publication of application: 13.05.2015
(73) Proprietor: LSIS Co., Ltd., Anyang-si, Gyeonggi-do 431-848 (KR)
(72) Inventor: Lee, Dong Su, 431-848 Anyang-si, Gyeonggi-do (KR); Kim, Woo Sup, 431-848 Anyang-si, Gyeonggi-do (KR)
(74) Representative: Lang, Johannes

(56) References cited:
- WO-A2-2013/061132
- US-A1- 2008 081 224
- US-A1- 2011 133 694
- US-A1- 2011 202 220
- US-A1- 2013 184 937

## Description

### BACKGROUND

The present disclosure relates to an apparatus controlling a low voltage DC-DC converter (LDC) in an electric vehicle, and more particularly to, an apparatus for controlling an LDC in an electric vehicle that enables the LDC to autonomously wake up and operate when at least one of an ignition IGN signal and other electric components linked to the LDC is in the ON state and enables the LDC to recognize that other electric components linked to the LDC are all in the OFF state, and autonomously operate in a power-off state when other electric components linked to the LDC are all in the OFF state.

Electric components for a vehicle that are used for charging include a high-voltage battery, an on-board charger for charging the battery, a load device, and a low-voltage DC-DC converter (LDC).

Among others, the LDC plays the roles of converting a high voltage into a low voltage and charging a low voltage battery or transmitting power to a load device.

With the recent interest in an environmental issue, an interest in an environmentally-friendly vehicle increases and most of environmentally-friendly vehicles use electric energy for driving.

The LDC plays the roles of charging such electric energy in a low voltage battery and transmitting power to a load device. When such an LDC is not turned on in the necessary situation or is turned on in the unnecessary situation, it is possible to cause user inconvenience and uselessly consume currents.

Typically, the LDC is ON- or OFF-controlled only by an IGN signal. Thus, if a user powers off IGN for parking/stopping, the LDC may not operate. That, it is not possible to use a load device such as a radio or an air conditioner and it is not possible to charge a low voltage battery through the LDC. Thus, since a user needs to always turn on the IGN even while charging it, he or she has inconvenience.

At present, when power is controlled only by an IGN signal, the IGN signal needs to be always applied even while a user performs a charging operation, and even if all electric components do not operate, the LDC always operates if the IGN signal is applied. Thus, there is inefficiency. Also, since the LDC is always turned on when the LDC does not actually operate but the IGN is turned on, currents are uselessly consumed.

US2013184937 concerns a vehicular power supply system and a main battery which supplies electric power to both main machine drive circuit, which drives a main motor for driving a vehicle, and a steering assist drive circuit, which drives a steering assist motor of a power steering apparatus. WO2013061132 concerns a battery case within which a battery is housed includes a first layer that is made of metal, a second layer that is made of heat insulating material, and a third layer that is made of phase-change heat storage material. US2011133694 discloses a method for controlling a charging voltage of a 12V auxiliary battery for a hybrid vehicle, which can (1) improve charging efficiency of an auxiliary battery by increasing the output voltage of a DC-DC converter during cold start when the outside air temperature is low, (2) improve the charging efficiency of the auxiliary battery by increasing or decreasing the output power of the DC-DC converter according to the state of charge of the auxiliary battery. US2011202220 relates to a control device for an electric vehicle that controls electric power from a high-voltage battery to drive a drive motor and accessories. US2008081224 concerns a method for starting a cold or frozen fuel cell stack as efficiently and quickly as possible in a vehicle application is based upon a state of charge of a first power source such as a high voltage battery.

Thus, there is a decrease in user convenience and an unnecessary loss in power.

### SUMMARY

Embodiments provide an apparatus controlling a low voltage DC-DC converter (LDC) in an electric vehicle that enables the LDC to autonomously wake up and operate when at least one of an ignition IGN signal and other electric components linked to the LDC is in the ON state and enables the LDC to recognize that other electric components linked to the LDC are all in the OFF state, and autonomously operate in a power-off state when other electric components linked to the LDC are all in the OFF state.

The technical tasks of the present invention are not limited to the above-mentioned technical tasks and other technical tasks not mentioned will be able to be clearly understood by a person skilled in the art from the following descriptions.

In one embodiment, an apparatus for controlling a low voltage DC-DC converter (LDC) in an electric vehicle linked to an ignition unit, an LDC, and one or more load devices includes a communication unit performing communication with the one or more load devices; and a control unit outputting a power control signal to the LDC, transmitting and receiving data including state information on the LDC and the one or more load devices, wherein when ignition IGN signal state information on the ignition unit is in an OFF state, the control unit outputs a power on control signal to the LDC if there is a load device being in the ON state among the one or more load devices, and when the ignition IGN signal state information on the ignition unit is in an ON state, the control unit outputs a power off control signal to the LDC if all of the one or more load devices are in the OFF state.

The control unit may wake up the LDC and perform a charging operation, while the position of an ignition key at the ignition unit is maintained in the IGN off state.

The control unit may output a power off control signal to the LDC to enable the LDC to be switched to the OFF state, if an ignition IGN off signal is sensed from the ignition unit while the LDC is in a normal operation state.

The apparatus may further include a memory that stores ignition IGN signal state information on the ignition unit, state information on the LDC, voltage information, current information, and information on the load devices.

The communication unit may be a controller area network (CAN) that performs CAN communication with the one or more load devices through a CAN bus.

The control may output a power on control signal to the LDC if there is data in the CAN bus when ignition IGN signal state information on the ignition unit is in the OFF state, and the control may output a power off control signal to the LDC if there is no data in the CAN bus when the ignition IGN signal state information on the ignition unit is in the ON state.

In another embodiment, a method of controlling an LDC in an electric vehicle linked to an ignition unit, an LDC, and one or more load devices includes outputting a power on control signal to the LDC when ignition IGN signal state information on the ignition unit is in an OFF state and there is a load device being in an ON state among the one or more load devices; and outputting a power off control signal to the LDC when ignition IGN signal state information on the ignition unit is in the ON state and all of the one or more load devices are in the OFF state.

The outputting of the power on control signal to the LDC may include maintaining the LDC in the power off state; determining whether an ignition IGN signal monitored from the ignition unit is in the ON state; and outputting a power on control signal to the LDC and switching the LDC to a wake up state, when the ignition IGN signal in the on signal as a result of determination.

The method may further include determining whether there is data in a CAN bus when the IGN signal sensed from the ignition unit is in the OFF state, not in the ON state as a result of determining whether the IGN signal is in the ON state; and outputting a power on control signal to the LDC and waking up the LDC, when there is data in the CAN bus as a result of determination.

The outputting of the power off control signal to the LDC may include determining whether the ignition IGN signal from the ignition unit in the OFF state, while the LDC is in the normal operation state; outputting a power off control signal to the LDC and switching the LDC to the OFF state, while the ignition IGN signal in the off signal as a result of determination; determining whether there is data in the CAN bus, to determine whether all other load devices are in the OFF state, when the ignition IGN signal in the on signal as a result of determination; and outputting a power off control signal to the LDC and switching the LDC to the power off state, when ignition IGN is in the ON state but there is no data in the CAN bus as a result of determination.

### BRIEF DESCRIPTION OF THE DRAWINGS

Fig. 1 is a block diagram of an apparatus for controlling an LDC in an electric vehicle according to an embodiment.
Fig. 2 is a flow chart of a method of controlling an LDC in an electric vehicle according to an embodiment.

### DETAILED DESCRIPTION OF THE EMBODIMENTS

Exemplary embodiments of the present invention are described below in detail with reference to the accompanying drawings.

The terms used herein are general terms currently, widely used if possible, but in particular cases, terms arbitrarily selected by the applicant are used and in these cases, since their meanings are described in detail in corresponding parts of the detailed description, it should be noted that the present invention needs to be understood with the meanings of the terms, not the names of the terms.

That is, in the following description, the word "including" does not exclude the presence of components or steps other than those enumerated.

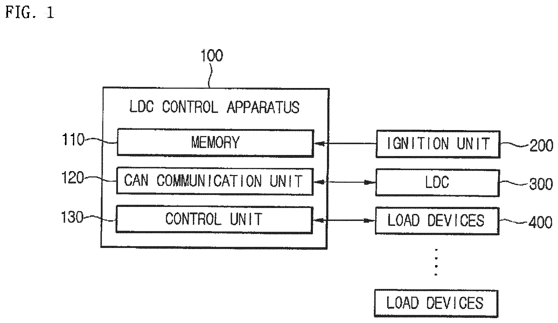

Fig. 1 is a block diagram of an apparatus for controlling an LDC in an electric vehicle according to an embodiment.

Referring to Fig. 1, an LDC control apparatus 100 is electrically connected to an ignition unit 200, an LDC 300, and one or more load devices 400.

The LDC control apparatus 100 is connected to the one or more load devices 400 through a controller area network (CAN) network. The LDC control apparatus 100 and the load devices 400 may perform CAN communication through the CAN bus to transmit and receive data. The load devices 400 receive power by the LDC 300 or a battery (not shown). The ignition unit 200 generates an ignition IGN on signal or an ignition IGN off signal by manipulating a user's ignition key.

The LDC control apparatus 100 may include a memory 110, a CAN communication unit 120, and a control unit 130.

The memory 100 stores ignition IGN signal state information on the ignition unit 200, state information, voltage information, and current information on the LDC 300, and information on the load devices 400.

The CAN communication unit 120 performs CAN communication with the load devices 400 through the CAN bus. Although the CAN communication unit 120 is described, the present invention is not limited thereto and a communication unit may also be implemented through other communication techniques in an electric vehicle.

The control unit 130 outputs a power control signal to the LDC 300, transmits and receives data including state information on the LDC 300 and on the load devices 400.

The control unit 130 may sense an ignition IGN signal generated from the ignition unit 200 and a wake up signal for the load device 400. The wakeup signal of the load device 400 is generated when the load device 400 operates.

The control unit 130 maintains the LDC 300 in a power off state.

When an ignition IGN on signal is generated from the ignition unit 200 by externally manipulating a user's ignition key, the control unit 130 outputs a power on control signal to the LDC 300 and switches the LDC 300 to a wake up state. Thus, the LDC 300 is switched to the wake up state and performs a normal operation.

On the other hand, when the ignition IGN signal sensed from the ignition unit 200 is in the OFF state, the control unit 130 determines whether there is data in the CAN bus.

When there is data in the CAN bus, the control unit 130 outputs a power on control signal for the LDC 300, wakes up the LDC 300, and enables the LDC 300 to perform a normal operation.

Thus, the control unit 130 may wake up the LDC 300 and perform a charging operation while the position of an ignition key at the ignition unit 200 is maintained in an ignition IGN off state.

If an ignition IGN off signal is sensed from the ignition unit 200 while the LDC 300 is in a normal operation state, the control unit 130 outputs a power off control signal to the LDC 300 so that the LDC 300 is switched to an OFF state.

When it is sensed that the ignition IGN signal from the ignition unit 200 is in an ON state, the control unit 130 determines whether there is data in the CAN bus.

When there is no data in the CAN bus as a result of determination, the control unit 130 outputs a power off control signal to the LDC 300 even if ignition IGN is in the ON state, and the control unit 130 switches the LDC 300 to the power off state. Thus, when the ignition IGN signal of the ignition unit 200 is in the ON state but there is no need for the LDC 300 to wake up, it is possible to decrease current consumption due to the LDC 300.

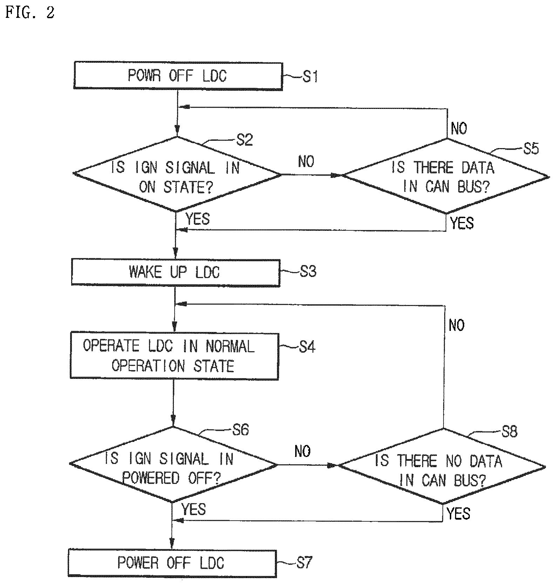

Fig. 2 is a flow chart of a method of controlling an LDC in an electric vehicle according to an embodiment.

Referring to Fig. 2, the control unit 130 maintains the LDC 300 in the power off state in step S1.

The control unit 130 determines whether the ignition IGN signal monitored from the ignition unit 200 in the ON state, in step S2.

When the ignition IGN signal is in the on signal as a result of determination, the control unit 130 outputs a power on control signal to the LDC 300 and switches the LDC 300 to a wake up state, in step S3. Thus, the LDC 300 is switched to the wake up state and performs a normal operation, in step S4.

On the other hand, when the ignition IGN signal sensed from the ignition unit 200 is in the OFF state, not in the ON state as a result of determination in step S2 , the control unit 130 determines whether there is data in the CAN bus.

When there is data in the CAN bus as a result of determination, the control unit 130 outputs a power on control signal to the LDC 300, wakes up the LDC 300, and enables the LDC 300 to perform a normal operation, in step S3.

While the LDC 300 is in the normal operation state, the control unit 130 determines whether the ignition IGN signal from the ignition unit 200 is in the OFF state, in step S6.

When the ignition IGN signal in the off signal as a result of determination in step S6, the control unit 130 outputs a power off control signal to the LDC 300 and switches the LDC 300 to the OFF state, in step S7.

When the ignition IGN signal in the ON state as a result of determination in step S6, the control unit 130 determines to determine whether there is data in the CAN bus, in step S8. The reason is to determine whether all other load devices are in the OFF state.

When there is no data in the CAN bus as a result of determination in step S8, the control unit 130 outputs a power off control signal to the LDC 300 even if ignition IGN is in the ON state, and the control unit 130 switches the LDC 300 to the power off state, in step S7.

By diversifying a method of controlling the power of the LDC, the present invention enables the LDC to autonomously wake up and operate when at least one of an ignition IGN signal and other electric components linked to the LDC is in the ON state, and enables the LDC to recognize that other electric components linked to the LDC are all in the OFF state, and autonomously operate in the power-off state when other electric components linked to the LDC are all in the OFF state. Thus, when any electric component does not operate, the LDC is in the power off state even if the ignition IGN signal is applied. Thus, it is possible to effectively decrease power consumption.

Since power is applied by recognizing when the operation of the LDC is needed, it is possible to enhance user convenience, and power is cut off by recognizing when the operation of the LDC is not needed, it is possible to prevent an unnecessary loss in power.

While particular embodiments have been described in the detailed description of the present invention, several variations may be made without departing from the scope of the present invention. Therefore, the scope of the present invention should not be limited to the above-described embodiments but be defined by the following claims and equivalents thereof.

## Claims

1. An apparatus (100) for controlling a high voltage to low voltage DC-DC converter (LDC) in an electric vehicle electrically connected to an ignition unit (200), an LDC (300), and one or more load devices (400), the apparatus comprising:
a communication unit (120) performing communication with the one or more load devices (400); and
a control unit (130) outputting a power control signal to the LDC (300), receiving state information from the LDC (300) and the one or more load devices (400),
wherein when ignition IGN signal state information on the ignition unit (200) is in an OFF state, the control unit (130) outputs a power on control signal to the LDC (300) if there is a load device (400) being in the ON state among the one or more load devices (400), and when the ignition IGN signal state information on the ignition unit (200) is in an ON state, the control unit (130) outputs a power off control signal to the LDC (300) if all of the one or more load devices (400) are in the OFF state.

2. The apparatus according to claim 1, wherein the control unit (130) wakes up the LDC (300) and performs a charging operation, while the position of an ignition key at the ignition unit (200) is maintained in the IGN off state.

3. The apparatus according to claim 1, wherein the control unit (130) outputs a power off control signal to the LDC (300) such that the LDC (300) switches from an On state to the OFF state, if an ignition IGN off signal is sensed from the ignition unit (200) while the LDC (300) is in a normal operation state.

4. The apparatus according to claim 1, further comprising a memory (100) that stores ignition IGN signal state information on the ignition unit (200), state information on the LDC (300), voltage information, current information, and information on the load devices (400).

5. The apparatus according to claim 1, wherein the communication unit (120) is a controller area network (CAN) that performs CAN communication with the one or more load devices (400) through a CAN bus.

6. The apparatus according to claim 5, wherein the control unit outputs a power on control signal to the LDC (300) if there is data in the CAN bus when ignition IGN signal state information on the ignition unit (200) is in the OFF state, and the control unit (130) outputs a power off control signal to the LDC (300) if there is no data in the CAN bus when the ignition IGN signal state information on the ignition unit (200) is in the ON state.

7. A method of controlling a high voltage to low voltage DC-DC converter, LDC, (300) in an electric vehicle, the electric vehicle including an ignition unit (200), the LDC (300), and one or more load devices (400), the method comprising:
performing communication with the one or more load devices (400);
receiving state information from the LDC (300) and the one or more load devices (400);
outputting a power on control signal to the LDC (300) when ignition IGN signal state information on the ignition unit (200) is in an OFF state (S2) and there is a load device being in an ON state among the one or more load devices(400) (S5); and
outputting a power off control signal to the LDC (300) when ignition IGN signal state information on the ignition unit (200) is in the ON state (S6) and all of the one or more load devices (400) are in the OFF state (S8).

8. The method according to claim 7, further comprising:
maintaining the LDC (300) in the power off state (S1); and
waking up the LDC (300), when the ignition IGN signal is in the on signal (S3).

9. The method of claim 8, further comprising:
operating the LDC (300) in normal operation state (S4), when there is data in the CAN bus (S8).

## Patentansprüche

1. Vorrichtung (100) zum Steuern eines Hochspannung-zu-Niederspannung-DC-DC-Wandlers (LDC) in einem elektrischen Fahrzeug, verbunden mit einer Zündeinheit (200), einem LDC (300) und einer oder mehrerer Lastvorrichtungen (400), wobei die Vorrichtung umfasst:
eine Kommunikationseinheit (120), die Kommunikation mit der einen oder den mehreren Lastvorrichtungen (400) ausführt; und
eine Steuereinheit (130), die ein Leistungssteuerungssignal ausgibt an den LDC (300), und die Zustandsinformationen von dem LDC (300) und der einen oder den mehreren Lastvorrichtungen (400) empfängt,
wobei, wenn Zünd-IGN-Signalzustandsinformation zu der Zündeinheit (200) sich in einem AUS-Zustand befindet, die Steuereinheit (130) ein Strom-Ein-Steuersignal für den LDC (300) ausgibt, falls es eine Lastvorrichtung (400) unter der einen oder den mehreren Lastvorrichtungen (400) gibt, die sich in dem EIN-Zustand befindet, und wenn die Zünd-IGN-Signalzustandsinformation zu der Zündeinheit (200) sich in einem EIN-Zustand befindet, die Steuereinheit (130) ein Strom-Aus-Steuersignal für den LDC (300) ausgibt, falls alle der einen oder der mehreren Lastvorrichtungen (400) sich in dem AUS-Zustand befinden.

2. Vorrichtung nach Anspruch 1, wobei die Steuereinheit (130) den LDC (300) aufweckt und eine Lade-Operation ausführt, während die Position eines Zündschlüssels an der Zündeinheit (200) in dem IGN-AUS-Zustand beibehalten wird.

3. Vorrichtung nach Anspruch 1, wobei die Steuereinheit (130) ein Strom-Aus-Steuersignal für den LDC (300) bereitstellt, so dass der LDC (300) von einem Ein-Zustand zu einem AUS-Zustand umschaltet, falls ein Zünd-IGN-Aus-Signal von der Zündeinheit (200) erfasst wird, während der LDC (300) sich in einem normalen Betriebszustand befindet.

4. Vorrichtung nach Anspruch 1, ferner umfassend einen Speicher (100), der Zünd-IGN-Signal-Zustandsinformationen zu der Zündeinheit (200), Zustandsinformationen zu dem LDC (300), Spannungsinformation, Strominformation und Information zu den Lastvorrichtungen (400) speichert.

5. Vorrichtung nach Anspruch 1, wobei die Kommunikationseinheit (120) ein Steuergerätenetz (controller area network, CAN) ist, das CAN-Kommunikation mit der einen oder den mehreren Lastvorrichtungen (400) über einen CAN-Bus betreibt.

6. Vorrichtung nach Anspruch 5, wobei die Steuereinheit ein Strom-Ein-Steuersignal für den LDC (300) ausgibt, falls Daten auf dem CAN-Bus vorhanden sind, wenn Zünd-IGN-Signalzustandsinformation zu der Zündeinheit (200) sich in einem AUS-Zustand befindet, und wobei die Steuereinheit (130) ein Strom-Aus-Steuersignal für den LDC (300) ausgibt, falls keine Daten auf dem CAN-Bus vorhanden sind, wenn die Zünd-IGN-Signalzustandsinformation zu der Zündeinheit (200) sich in dem EIN-Zustand befindet.

7. Verfahren zum Steuern eines Hochspannung-zu-Niederspannung-DC-DC-Wandlers, LDC, in einem elektrischen Fahrzeug, wobei das elektrische Fahrzeug eine Zündeinheit (200), den LDC (300) und eine oder mehrere Lastvorrichtungen (400) umfasst, wobei das Verfahren umfasst:
Ausführen von Kommunikation mit der einen oder den mehreren Lastvorrichtungen (400);
Empfangen von Zustandsinformationen von dem LDC (300) und der einen oder den mehreren Lastvorrichtungen (400);
Ausgeben eines Strom-Ein-Steuersignal für den LDC (300), wenn Zünd-IGN-Signalzustandsinformation zu der Zündeinheit (200) sich in einem AUS-Zustand befindet und es eine Lastvorrichtung (400) unter der einen oder den mehreren Lastvorrichtungen (400) gibt, die sich in dem EIN-Zustand befindet (S5);
Ausgeben eines Strom-Aus-Steuersignal für den LDC (300), wenn die Zünd-IGN-Signalzustandsinformation zu der Zündeinheit (200) sich in einem EIN-Zustand befindet (S6) und alle der einen oder der mehreren Lastvorrichtungen (400) sich in dem AUS-Zustand befinden (S8).

8. Verfahren nach Anspruch 7, ferner umfassend:
Halten des LDC (300) in dem Strom-Aus-Zustand (S1); und
Aufwecken des LDC (300), wenn das Zünd-IGN-Signal sich in dem Ein-Signal befindet (S3).

9. Verfahren nach Anspruch 8, ferner umfassend:
Betreiben des LDC (300) in einem normalen Betriebszustand (S4), wenn sich Daten auf dem CAN-Bus befinden (S8).

## Revendications

1. Appareil (100) pour commander un convertisseur continu-continu haute tension-basse tension (LDC) dans un véhicule électrique, électriquement connecté à un système d'allumage (200), un LDC (300), et un ou plusieurs dispositifs de charge (400), l'appareil comprenant :
une unité de communication (120) qui effectue une communication avec un ou plusieurs dispositifs de charge (400) ; et
une unité de commande (130) qui envoie en sortie un signal de commande d'alimentation électrique vers le LDC (300), recevant des informations d'état provenant du LDC (300) et du ou des dispositifs de charge (400),
dans lequel, quand l'information d'état du signal d'allumage IGN se trouvant sur le système d'allumage (200) est à l'état OFF (hors tension), l'unité de commande (130) envoie en sortie vers le LDC (300) un signal de commande power ON (sous tension) s'il y a un dispositif de charge (400) qui se trouve à l'état ON (sous tension) parmi le ou les dispositifs de charge (400), et, quand l'information d'état du signal d'allumage IGN sur le système d'allumage (200) est à l'état ON (sous tension), l'unité de commande (130) envoie en sortie vers le LDC (300) un signal de commande power off (hors tension) si la totalité du ou des dispositifs de charge (400) se trouvent à l'état OFF (hors tension).

2. Appareil selon la revendication 1, dans lequel l'unité de commande (130) réveille le LDC (300) et effectue une opération de chargement, tandis que la position d'une clé de contact, dans le système d'allumage (200), est maintenue à l'état IGN off (allumage hors tension).

3. Appareil selon la revendication 1, dans lequel l'unité de commande (130) envoie au LDC (300) un signal de commande power off (hors tension) tel que le LDC (300) commute d'un état On (sous tension) à l'état OFF (hors tension) si un signal d'allumage IGN off (hors tension) est capté, provenant du système d'allumage (200), tandis que le LED (300) est dans un état de fonctionnement normal.

4. Appareil selon la revendication 1, comprenant en outre une mémoire (100) qui stocke l'information d'état du signal d'allumage IGN sur le système d'allumage (200), l'information d'état sur le LDC (300), l'information de tension, l'information de courant et l'information concernant les dispositifs de charge (400).

5. Appareil selon la revendication 1, dans lequel l'unité de communication (120) est un réseau de multiplexage (CAN) qui exécute une communication CAN avec le ou les dispositifs de charge (400) par l'intermédiaire d'un bus CAN.

6. Appareil selon la revendication 5, dans lequel l'unité de commande envoie au LDC (300) un signal de commande de power on (sous tension) s'il y a des données dans le bus CAN quand l'information d'état du signal d'allumage IGN sur le système d'allumage (200) est à l'état OFF (hors tension), et l'unité de commande (130) envoie en sortie vers le LDC (300) un signal de commande power off (hors tension) s'il n'y a aucune donnée dans le bus CAN quand l'information d'état du signal d'allumage IGN sur le système d'allumage (200) est à l'état ON (sous tension).

7. Procédé pour commander un convertisseur continu-continu haute tension-basse tension LDC (300) dans un véhicule électrique, le véhicule électrique comprenant un système d'allumage (200), un LDC (300) et un ou plusieurs dispositifs de charge (400), le procédé comprenant :
la réalisation d'une communication avec la ou les dispositifs de charge (400) ;
la réception d'une information d'état à partir du LDC (300) et du ou des dispositifs de charge (400) ;
l'envoi en sortie vers le LDC (300) d'un signal de commande power on (sous tension) quand l'information d'état du signal d'allumage IGN sur le système d'allumage (200) est à l'état OFF (hors tension) (S2) et qu'il y a un dispositif de charge à l'état ON (sous tension) parmi le ou les dispositifs de charge (400) (S5) ; et
l'envoi en sortie vers LDC (300) d'un signal de commande power off (hors tension) quand l'information d'état du signal d'allumage IGN sur le système d'allumage (200) est à l'état ON (sous tension) (S6) et que la totalité du ou des dispositifs de charge (400) se trouvent à l'état OFF (hors tension) (S8).

8. Procédé selon la revendication 7, comprenant en outre le maintien du LDC (300) dans l'état power off (hors tension) (S1) ; et le réveil du LDC (300), quand le signal d'allumage IGN se trouve dans le signal on (sous tension) (S3).

9. Procédé selon la revendication 8, comprenant en outre le fonctionnement du LDC (300) à l'état de fonctionnement normal (S4) quand il y a des données dans le bus CAN (S8).
